# EUROPEAN PATENT APPLICATION

(11) **EP 1 345 449 A1**
(43) Date of publication of application: **17.09.2003**
(21) Application number: 01130696.6
(22) Date of filing: 21.12.2001
(51) Int. Cl.: H04N 7/34, H04N 7/26

(54) **Digital image compression and decompression using block coding**

(71) Applicant: Sung, Chih-Ta Star, 85625 Glonn (DE)
(72) Inventor: Sung, Chih-Ta Star, 85625 Glonn (DE); Cheng, Joanne Chowen, 85625 Glonn (DE)
(74) Representative: Grünecker, Kinkeldey, Stockmair & Schwanhäusser Anwaltssozietät

(57) **Abstract**

The invention is concerned with a method for compressing digital images comprising the steps of defining blocks of pixels, performing a discrete cosine transform to obtain coefficient blocks for at least two of the blocks, performing a coefficient quantization to obtain quantized coefficient blocks for each coefficient block, deciding with the use of a first pre-determined criterion whether to perform a lossy compression on the basis of the quantized coefficient blocks or a lossless compression of each quantized coefficient block, and performing the compression in accordance with the result of the decision of the previous step. The invention further is concerned with a method for compressing digital images comprising the steps of defining blocks of pixels, performing a discrete cosine transform to obtain coefficient blocks for at least two of the blocks, performing a coefficient quantization to obtain quantized coefficient blocks for each coefficient block, and performing a lossy compression on the basis of the quantized coefficient blocks.

## Description

### Field of invention

This invention relates to digital still image compression and decompression using block coding.

### Background of the invention

A variety of still image compression and decompression methods is known in the art, e.g. GIF, JPEG, PNG. As an example, the ISO Joint Photographic Experts Group, JPEG, has developed a standard still image compression algorithm which includes both lossy and lossless encoding. Since the release of the JPEG proposed draft of the still image compression standard, more and more applications have adopted JPEG compression standard and developed their products that includes digital still camera, scanner, printer, medical equipment, document archiving, etc.

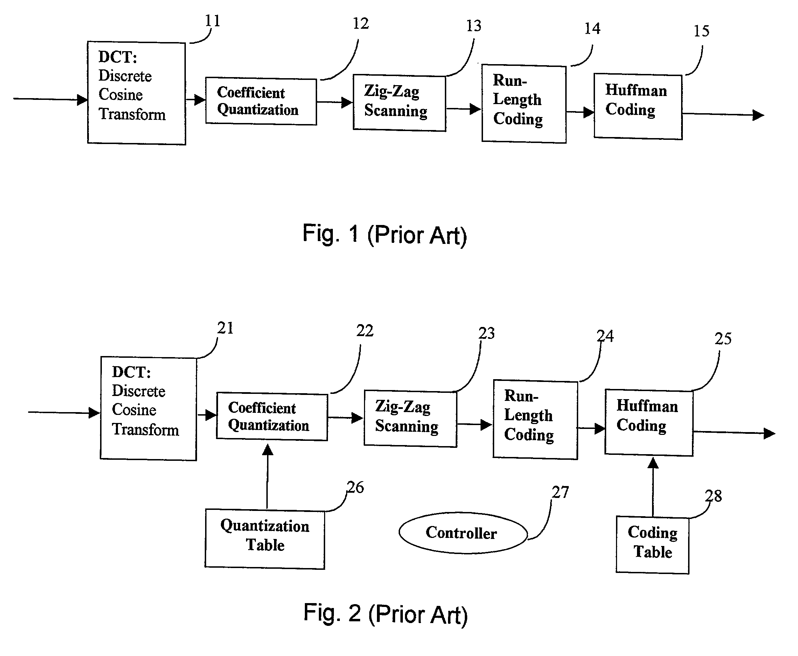

Taking advantage of human's higher sensitivity to brightness than to color, the JPEG standard describes images in terms of luminance (brightness) and chrominance (color hue and saturation) and, thus, uses a YUV color system. According to the JPEG standard, the luminance is separated from chrominance. An image to be compressed is split into blocks of pixels; this is called block coding. In fact, when dealing with color images (RGB or YUV), JPEG treats the image as if it were actually three separate images, one for each companent. Then, the following steps are performed to achieve an image data compression for each luma (brightness) and chroma (color) (compare Figure 1):

In a first step, a discrete cosine transform (DCT) 11 is performed. Similar to analyzing audio samples using the Fourier transform, DCT is to transform the time domain 8x8 pixel image data into a representation in the frequency domain. The two-dimensional result of the DCT concentrates the information in the top left corner of an 8x8 matrix. The more to the right and to the bottom of the matrix, the higher the frequency and the less (due to the human visual system) the data dominate the information and can be ignored or thrown away without sacrificing much quality of information. The DCT is a lossless transformation that does not actually perform image compression. It prepares for the lossy quantization stage of the image compression process.

Lossless compression means that a data stream is compressed so that it can be decompressed into an identical copy of the stream. Lossy compression refers to a compression technique where the compressed stream cannot be expanded into an exact copy of the input.

The second step is quantization 12. Quantization is the process of reducing the number of bits needed to store an integer value by reducing the precision of the integer. In the present case, the integers are the coefficients of the DCT output matrix. The farther away from the top left corner (the DC coefficient), the higher the frequency and hence the less one cares about maintaining the precision in its value. In the implementation of the JPEG algorithm, quantization is completed by using a "Quantization Table", which is again an 8×8 matrix. For every coefficient position in the DCT matrix, a corresponding value in the quantization matrix gives a quantizing value which is to divide the DCT coefficient. The quantizing values range from 1 to 255. Quantization is the only step that image data loss comes from.

The third step is zig-zag sequence scanning 13: A large number of coefficients in the DCT matrix are truncated to zeros during the coefficient quantization stage. The zig-zag stage is to prepare a sequence of stream data for the next run-length coding. Starting from the top left corner, the DC coefficient, the quantized DCT matrix is scanned in a sequence along diagonal paths, selecting what should be the highest value elements first, and working its way toward the values likely to be lowest.

The fourth step is run-length coding 14: Run-length stands for counting the number of consecutive zeros before the next nonzero coefficient. For example a run-length pair of (13, 122) stands for 13 consecutive zeroes followed by a nonzero value of 122. This gives an opportunity for outstanding compression similar to the algorithm adopted by most FAX machines.

The last step is Huffman coding 15. In general, JPEG uses some type of entropy encoding. Besides Huffman coding, arithmetic coding is another possibility. Huffman coding is one of the most popular statistical coding methods. It creates variable-length codes and assigns shorter codes to symbols with higher probability.

A corresponding JPEG encoder (see Figure 2) usually comprises a circuit for the discrete cosine transform 21 and a circuit for the coefficient quantization 22. A storage device contains a quantization table 26. The encoder further comprises circuits for the zig-zag scanning 23, the run-length coding 24 and for the Huffman coding 25. A storage device contains a coding table 28 used in the Huffman coding circuit 25. A controller 27 controls the data flow.

Although the JPEG image compression can reduce the original image data size by up to 80 or 90%, in applications with hight density of image date, still a large amount of storage devices is required to save the compressed image data. The higher the resolution of an image, the higher the required amount of data to represent the image.

Taking a picture of 7 inches x 5 inches as an example, with 100 pixels per inch resolution, the picture is composed of a total of 350,000 pixels (700 x 500 pixels) resulting in 8,400,000 bits of digitized data (24 bits per pixel of R,G,B colors). After the procedure of a JPEG image compression, there are still 840,000 bits of data remaining. A resolution of 300 pixels per inch will require 9 times more data to represent the image information. This means that there are 75,600,000 bits (75.5 Mbits) of image data before image compression and 7,560,000 (7.56 Mbits) post image compression data.

Therefore, the problem underlying this invention is to provide a method and an apparatus for digital image compression and decompression with improved compression rate.

### Description of the invention

This problem is solved by the methods for compressing digital images of claims 1 and 4 and the digital image compression/decompression system of claims 10 and 11.

The first method for compressing digital images comprises the steps:
(a) defining blocks of pixels,
(b) performing a discrete cosine transform to obtain coefficient blocks for at least two of the blocks,
(c) performing a coefficient quantization to obtain quantized coefficient blocks for each coefficient block,
(d) deciding with the use of a first predetermined criterion whether to perform a lossy compression on the basis of the quantized coefficient blocks or a lossless compression of each quantized coefficient block, and
(e) performing the compression in accordance with the result of the decision of step (d).

It is to be understood that these steps are not necessarily to be performed in the above order. For example, a first block can pass steps (b) and (c), then, a second block passes these steps. After that, steps (d) and (e) are performed using the first and the second block. Then, a third block passes steps (b) and (c), followed by performing step (d) and (e) using the first and the third block.

In contrast to JPEG, for example, where after step (c) always a lossless compression is performed, the method of the invention thus provides a compression method with an improved compression rate.

Preferably, the deciding whether to perform a lossy or a lossless compression for each quantized coefficient block comprises the steps:
determining a decision difference block of the quantized coefficient block and another quantized coefficient block,
determining a characteristic value of the decision difference block, and
deciding on the basis of a comparison of the characteristic value with a predetermined threshold value.

Determining the difference block of two blocks is to be understood in the sense of matrix subtraction. This is also possible for blocks of different size. In this case, for example, subblocks of the larger block can be reduced to single values to obtain blocks of corresponding size.

By compressing not a complete block but only an indicator number representing a block, the required amount for encoding an image can be reduced considerably. This is particularly useful when the quantized coefficient values of a first block and of another block (e.g. located in the neighbourhood of the first block) do not differ very much.

Advantageously, the lossless compression comprises the steps:
performing a zig-zag scanning,
performing a run-length coding, and
performing a Huffman coding.

This corresponds, for example, to the case of JPEG compression. Therefore, the method of the invention can be incorporated into a JPEG compression algorithm. However, the method of the invention is by no means restricted to the use in connection with standard JPEG compression.

The invention also provides a second method for compressing digital images comprising the steps:
(a) defining blocks of pixels,
(b) performing a discrete cosine transform to obtain coefficient blocks for at least two of the blocks,
(c) performing a coefficient quantization to obtain quantized coefficient blocks for each coefficient block, and
(d) performing a lossy compression on the basis of the quantized coefficient blocks.

With this method, the compression rate can be even further increased.

In the following, preferred embodiments of the invention regarding the steps of performing a discrete cosine transform and of the lossy compression are described. These advantageous steps discussed in the following can be applied to both the first and the second method.

Preferably, in step (b) of the above methods, the at least two blocks form a connected region of blocks, i.e. each block is sharing an edge or a vertex with another block of the region.

Advantageously, the lossy compression on the basis of the quantized coefficient blocks for each quantized coefficient block comprises the steps:
determining a compression difference block of the quantized coefficient block and another quantized coefficient block,
deciding according to a second predetermined criterion which block out of a predetermined lookup table of blocks matches the compression difference block best, and
compressing the compression difference block using an indicator symbol representing the best matching block out of said lookup table.

By compressing not a complete difference block but only an indicator symbol representing a block, the required amount of bits to encode an image can be reduced considerably. In the case of the first method, the efficiency of the method can be increased by using the decision difference block also as compression difference block.

Preferably, the deciding according to a second predetermined criterion comprises the steps:
determining difference blocks of the compression difference block and each block out of the lookup table,
determining a characteristic value of each difference block, and
deciding on the basis of a comparison of the characteristic values of the difference blocks.

For the above methods, the characteristic value of a block preferably is obtained by calculating the root mean square (RMS) of the values defining the block. Of course, other possibilities are also well suited.

Such a characteristic value can be interpreted as a measure of how much the blocks of which a difference block is determined actually differ. If the RMS value is small, this can indicate that the blocks are very similar. In the case that blocks do not differ very much, the difference block contains many zeros. Compressing such a difference block can yield a high data reduction.

Advantageously, the lossy compression further comprises the step:
re-formatting an output bit stream to match the format of a lossless compressed output stream.

When using this additional step, a bit stream resulting from a lossless compression has the same format as a bit stream resulting from a lossy compression. In this case, it is not necessary to indicate the beginning and the end of a compressed block in the bit stream. This simplifies the decompression considerably.

The invention provides a digital image compression system comprising:
storage devices for storing blocks and a lookup table of blocks,
a subtraction circuit for calculating the difference between blocks,
a controller circuit to determine whether a lossy compression be performed,
a data packing circuit to determine the best matching block out of the lookup table and to pack an indicator number identifying the best matching block into an output bit stream.

The invention also provides a digital image decompression system comprising:
storage devices for storing blocks and a lookup table,
an adder circuit for adding reference blocks and difference blocks,
a controller circuit to determine whether a lossy compression has been performed,
a data unpacking circuit to unpack a indicator number from an incoming bit stream and to determine a matching block out of the lookup table that corresponds to the indicator number.

The invention further provides a computer program product directly loadable into the internal memory of a digital computer, comprising software code portions for performing at least the steps of the lossy compression of the above methods, when the product is run on a computer.

The invention also provides a computer program product stored on a medium readable by a computer, comprising computer readable program means for causing a computer to perform at least the steps of the lossy compression of the above methods, when the product is run on a computer.

### Brief description of the drawings

Figure 1 is a block diagram of a prior art JPEG compression algorithm.
Figure 2 shows an implementation of a JPEG encoder.
Figure 3 illustrates a concept of difference blocks.
Figure 4 shows adjacent blocks and blocks within connected regions.
Figure 5 shows an image encoder using difference block compression.
Figure 6 is block diagram of a system for image compression using difference blocks.
Figure 7 shows a compressed image data stream.

### Description of preferred embodiments

In the following, preferred embodiments of the invention are described. Starting point for the following description is the JPEG compression algorithm. It is to be understood, however, that the invention is not restricted to this compression standard but can be applied to any digital image compression method comprising the steps of claim 1.

A prior art implementation of still image compression as shown on the Figure 2 is based on the procedure of the JPEG still image compression standard. It comprises a discrete cosine transform (DCT) 21 (see Figure 2) that transforms an array of 8x8 pixels of data within the time domain into another 8x8 array of coefficients in the frequency domain. After the DCT, the information of the 8x8 data block is concentrated in the top left corner of the 8x8 coefficient block. One can take advantage of the fact that the farther away from the top left corner, the higher the frequency corresponding this coefficient and the less important the coefficient. This fact can be exploited by using larger quantization values for the coefficients that are located more to the right and to the bottom. In this way, the coefficient quantization 22 truncates the higher frequency data that are less important in representing the image information. In the implementation, the users or product manufacturers are free to set up the programmable quantization table 26 to truncate the DCT coefficients. The restriction to these quantization table is that the result of the output of any quantized block data should not drift beyond the limit of the JPEG compliant resolution. After quantization, the 8x8 array of coefficients will have high amount of zeros in the bottom right corner. The zig-zag scanner 23 collects the data from the top left to the bottom right. The resulting data stream usually contains many non-zero values at the beginning and more zeros at the end.

DCT does not cause any data loss and, thus, is a lossless step of the JPEG image compression procedure. The quantization is the only step which causes a data loss. DCT and quantization are the two stages preparing the image data for the zig-zag scanning. After that, the scanned stream of data is run-length coded 24 and entropy coded (e.g. Huffman coded 25) for further data compression similar to the procedure and algorithms adopted by fax machines.

A run-length pair represents the number of consecutive zeros and the following non-zero value in a data stream. Huffman coding is one kind of statistical coding algorithms. It assigns short codes to frequently occuring symbols and longer codes to less frequent symbols. According to the JPEG standard, the data in the Huffman coding table 28 is compared to the incoming data stream. The final output data stream of the JPEG image compression comprises the corresponding codes taken from the Huffman coding table.

According to a preferred embodiment of the invention, after the coefficient quantization it is decided whether to perform a lossy or a lossless compression. In the JPEG case, it is thus decided whether to continue with the standard zig-zag scanning or to perform a lossy compression instead.

In a preferred embodiment, the lossy compression is based on compressing difference blocks.

In this way, particularly when different blocks have similar quantized coefficient blocks, an improved compression rate can be achieved. For example, when increasing the image resolution (300 pixels per inch vs. 100 pixels per inch) there is an increased probability that adjacent or surrounding blocks differ only slightly.

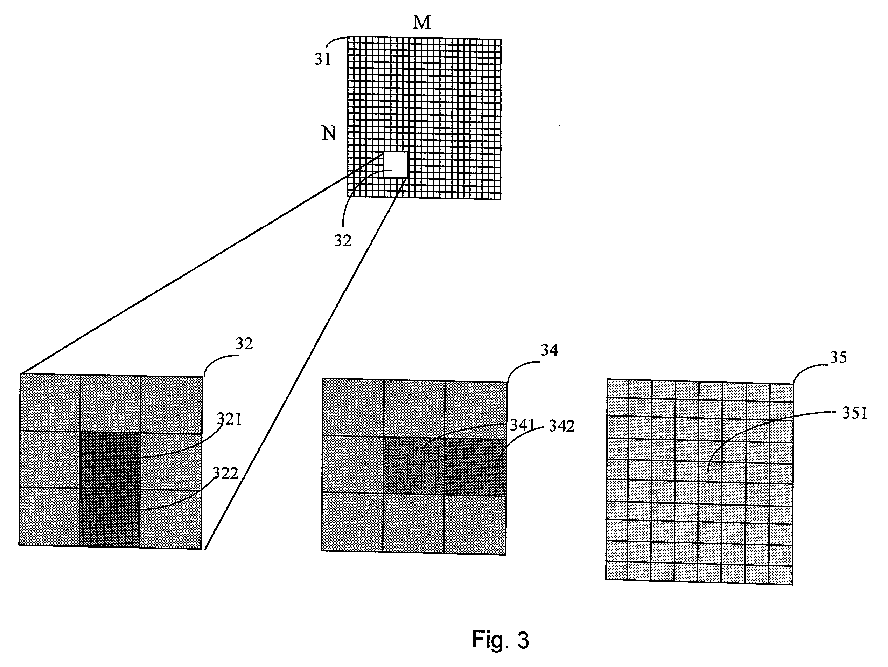

Figure 3 depicts the concept of the present invention of using difference blocks for the example of an image 31 consisting of an array of MxN blocks of pixels. This is an example of a black-and-white picture; color images consist of several arrays (e.g. one for R,G, and B, respectively). In this example, a discrete cosine transform (DCT) is performed for the blocks of a connected region 32 comprising 9 blocks. The DCT is followed by a quantization step. Since two blocks, block 321 and block 322 within region 32, are identical, their quantized coefficient blocks will be identical as well. The resulting difference block will contain zeros only. If another region comprises two similar blocks 341 and 342, the corresponding quantized coefficient blocks tend to be similar. Consequently, the difference block may contain many zeros. In some location 35 with a large amount of identical blocks, starting from one block 351 and calculating the difference blocks with the surrounding blocks results in a large number of zero blocks. In this case, a very high compression rate can be obtained.

According to a preferred ambodiment, the decision whether to perform a lossy or a lossless compression can be based on the determination of a characteristic value of a difference block. There are several alternatives to calculate such a characteristic value. According to a first preferred embodiment, the characteristic value of a difference block is given by the root mean square of the block values. According to another preferred embodiment, the characteristic value is given by the number of zeros in the difference block or in subblocks of the difference block.

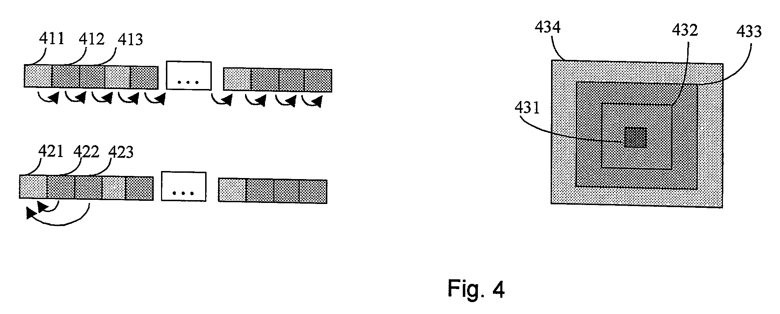

Figure 4 shows preferred embodiments of taking blocks that form a connected region.

According to a first embodiment, the blocks are taken from the same row. In a first alternative, only two neighbouring blocks are chosen. One starts taking blocks 411 and 412. After having obtained the corresponding quantized coefficient blocks, it is decided (using the difference block) whether to compress both quantized blocks losslessly or to compress the first block losslessy and the difference block lossily. This procedure is repeated for blocks 412 and 413 and so on up to the end of the row. In a second alternative, all blocks in a row are taken, cosine transformed and quantized. Then, it is decided whether to use a lossy compression for the difference block of the first 421 and the second block 422, for the first 421 and the third block 423, and so on. In this case, all blocks of the row are compared to the first one.

According to a second embodiment, difference blocks of a first block 431 and the blocks surrounding it are determined (this corresponds also to the case of Figure 3). For example, if the region 432 contains 9 blocks, one starts with the center block 431 and determines the difference blocks of the center block 431 and the eight adjacent blocks. For each difference block, it is decided whether to compress it losslessly or lossily. The region of blocks to take into account may also comprise the regions 433 and 434. The region of blocks to be cosidered can be predetermined and fixed or variable. In a preferred embodiment of the latter case, one employs a criterion based on difference blocks to decide how many blocks surrounding the first one are taken into account. This criterion can always be evaluated when deciding whether to compress losslessly or lossily.

If the blocks are chosen arbitrarily, their position (at least their relative position) has to be encoded as well.

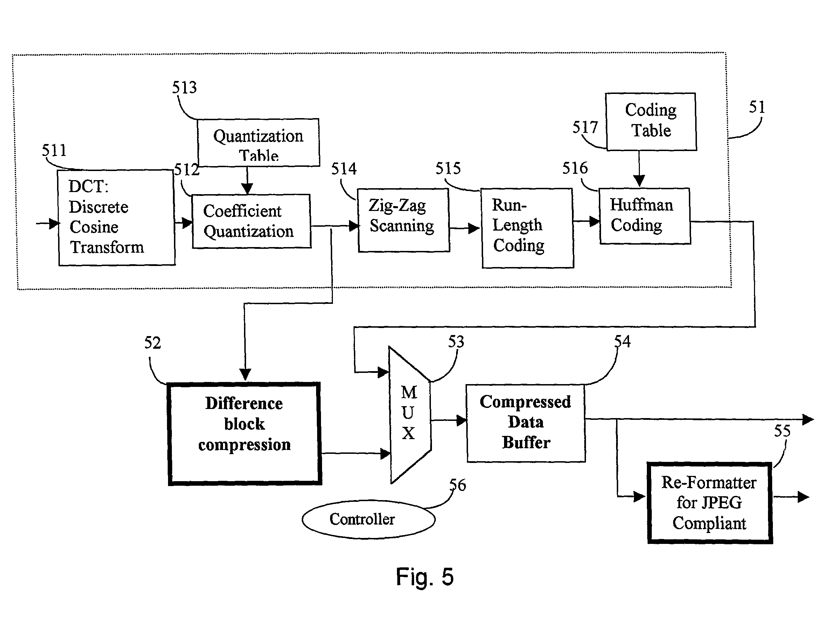

A preferred embodiment of a digital image compression system corresponding to a JPEG compression is shown in Figure 5. It comprises a standard JPEG compression circuit 51 with circuits to perform a DCT 511, a coefficient quantization 512, a zig-zag scanning 514, a run-length coding 515 and a Huffman coding 516. Storage devices 513 and 517 contain a user/manufacturer programmable quantization table and a coding table for the Huffman coding. After the coefficient quantization, a quantized coefficient block is fed to a circuit 52 for performing a difference block compression. If, for example, the characteristic value of a difference block of two quantized coeffcient blocks is below than a predetermined threshold value, a difference block compression is performed and the standard JPEG compression is discarded. The encoded blocks are fed into the temporary storage device 54 as the compressed stream data. On the other hand, if the characteristic value is above the threshold, the corresponding block is further processed according to the standard JPEG procedure. A multiplexer circuit 53 is to select the data from either the standard JPEG compression procedure or from the quantized coefficient block comparing and difference block compression. A controller 56 is to control the data flow of the implementation of the difference block compression and also functions as the decision maker to determine which data stream should be flushed out or be selected as the input into the storage data buffer before it starts sending to other storage media like a memory card, a PC or transmission media like networking equipment. In some applications, the compressed image stream is required to be JPEG standard compliant and a re-formatter 55 is implemented to convert the intermediate data stream into a JPEG compliant format before sending out to other storage or transmission media.

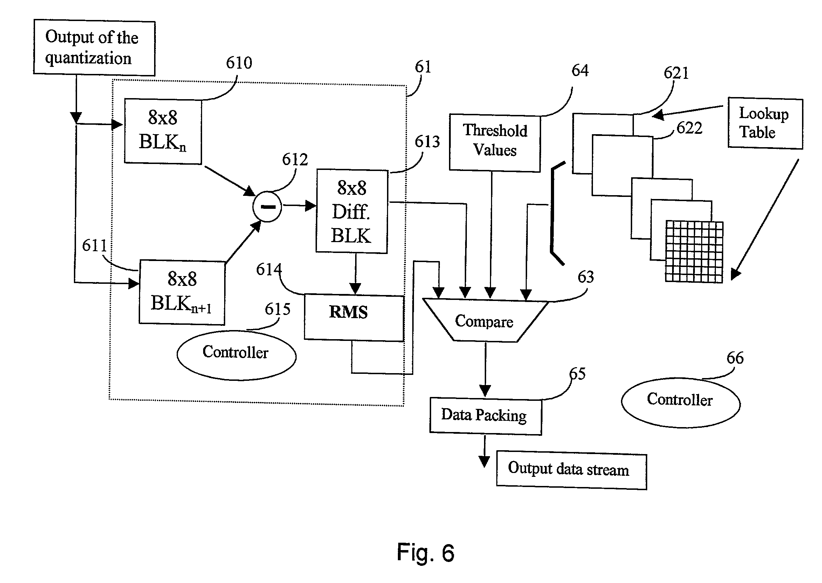

A preferred embodiment of a block data comparing and difference block coding circuit for JPEG compliant blocks is shown in Figure 6. The output of the quantization is conducted to the input of block (8x8) storage devices 610, 611 for further manipulations. Going through a subtractor 612, the difference block of two quantized coefficient blocks 610 (the *n*-th block BLKₙ) and 611 (the (*n*+1)-th block BLKₙ₊₁) is stored in another block storage device 613. In the circuit 614 the root mean square (RMS) value of the difference block is calculated. A controller 615 is to control the data flow of the implementation of the difference block and RMS calculation. Using circuit 63, the RMS value is compared to a predetermined threshold stored in storage device 64 to determine whether it is smaller than the threshold value so to let the difference block further go through the difference block compression or to discard this possibility and let the standard JPEG compression be performed. If the difference block compression is selected, the difference block is compared to a lookup table comprising predetermined blocks 621, 622 ... to determine an identical or best match block. The identical or best match block can be obtained by determining difference blocks of the blocks out of the lookup table and the difference block stored in storage device 613. For each of these difference blocks a characteristic value can be determined. If the characteristic value is the RMS of the block values, a smaller RMS value of a difference block stands for a better agreement of the corresponding pair of blocks.Thus, the block out of the lookup table yielding (in connection with the difference block stored in 613) the difference block with the smallest characteristic value is taken as best match block. This identical or best match block is taken as new difference block. This new difference block is encoded by encoding a symbol that is assigned to this block out of the lookup table and which allows an identification of the block. This encoding is performed by the data packing circuit 65. Therefore, this method of difference block compression significantly saves the amount of bits necessary to represent a difference block.

It is not necessary that all the steps of the invention are implemented as hardware circuits. Parts of the steps can also be implemented as program code that is run on a computer.

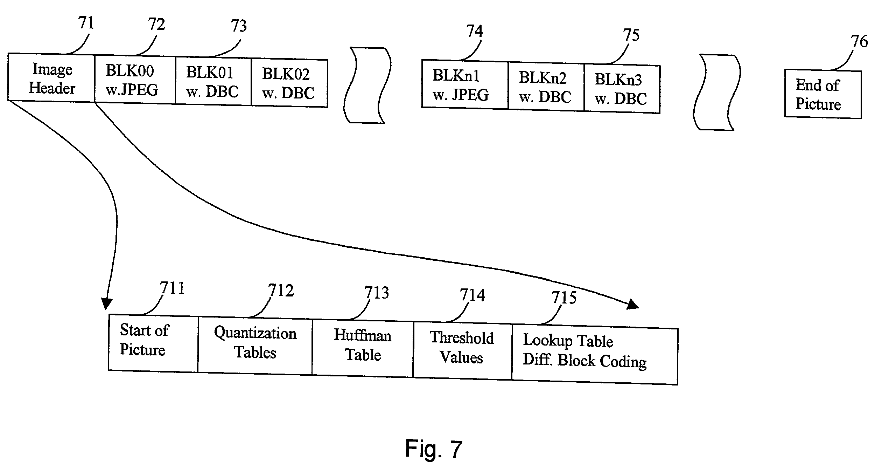

Figure 7 shows an example of a image data stream that has been compressed using a combination of standard JPEG compression and difference block compression (DBC). The data stream starts with a header 71 comprising some user of manufacturer determined codes including a starting code 711, at least one quantization table 712, a Huffman table 79, the predetermined threshold values 714, and a lookup table of blocks 715. The header is followed by the compressed blocks that are either compressed using standard JPEG 72 and 74 or using difference data coding 73 and 75 with an indicator value identifying the closest lookup block. Preferably, the DBC blocks are in a JPEG compliant format. Since a JPEG encoded "reference" or starting block is always necessary, the data stream always starts with such a standard JPEG block 72. The data stream closes with an "End of Picture" code 76. With the information extracted from the image header, a user can convert the compressed image data stream to either a JPEG data stream or to raw data to be displayed on display devices or for manipulation for other purposes.

To a large degree, the steps of the methods of the invention are independent of each other. Correspondingly, the above described preferred embodiments of different steps can be combined more or less in an arbitrary manner.

## Claims

1. A method for compressing digital images comprising the steps:
(a) defining blocks of pixels,
(b) performing a discrete cosine transform to obtain coefficient blocks for at least two of the blocks,
(c) performing a coefficient quantization to obtain quantized coefficient blocks for each coefficient block,
(d) deciding with the use of a first predetermined criterion whether to perform a lossy compression on the basis of the quantized coefficient blocks or a lossless compression of each quantized coefficient block, and
(e) performing the compression in accordance with the result of the decision of step (d).

2. The method of claim 1, wherein the deciding whether to perform a lossy or a lossless compression for each quantized coefficient block comprises the steps:
determining a decision difference block of the quantized coefficient block and another quantized coefficient block,
determining a characteristic value of the decision difference block, and
deciding on the basis of a comparison of the characteristic value with a predetermined threshold value.

3. The method of one of the preceding claims, wherein the lossless compression comprises the steps:
performing a zig-zag scanning,
performing a run-length coding, and
performing a Huffman coding.

4. A method for compression digital images comprising the steps:
(a) defining blocks of pixels,
(b) performing a discrete cosine transform to obtain coefficient blocks for at least two of the blocks,
(c) performing a coefficient quantization to obtain quantized coefficient blocks for each coefficient block, and
(d) performing a lossy compression on the basis of the quantized coefficient blocks.

5. The method of one of the preceding claims, wherein in step (b) the at least two blocks form a connected region of blocks.

6. The method of one of the preceding claims, wherein the lossy compression on the basis of the quantized coefficient blocks for each quantized coefficient block comprises the steps:
determining a compression difference block of the quantized coefficient block and another quantized coefficient block,
deciding according to a second predetermined criterion which block out of a predetermined lookup table of blocks matches the compression difference block best, and
compressing the compression difference block using an indicator symbol representing the best matching block out of said lookup table.

7. The method of claim 6, wherein the deciding according to a second predetermined criterion comprises the steps:
determining difference blocks of the compression difference block and each block out of the lookup table,
determining a characteristic value of each difference block, and
deciding on the basis of a comparison of the characteristic values of the difference blocks.

8. The method of one of the claims 2 - 7, wherein the characteristic value of a block is obtained by calculating the root mean square of the values defining the block.

9. The method of one of the preceding claims, wherein the lossy compression further comprises the step:
re-formatting an output bit stream to match the format of a lossless compressed output stream.

10. A digital image compression system comprising:
storage devices for storing blocks and a lookup table of blocks,
a subtraction circuit for calculating the difference between blocks,
a controller circuit to determine whether a lossy compression be performed,
a data packing circuit to determine the best matching block out of the lookup table and to pack an indicator number identifying the best matching block into an output bit stream.

11. A digital image decompression system comprising:
storage devices for storing blocks and a lookup table,
an adder circuit for adding reference blocks and difference blocks,
a controller circuit to determine whether a lossy compression has been performed,
a data unpacking circuit to unpack a indicator number from an incoming bit stream and to determine a matching block out of the lookup table that corresponds to the indicator number.

12. A computer program product directly loadable into the internal memory of a digital computer, comprising software code portions for performing at least the steps of the lossy compression of one of the claims 1 - 9, when the product is run on a computer.

13. A computer program product stored on a medium readable by a computer, comprising computer readable program means for causing a computer to perform at least the steps of the lossy compression of one of the claims 1 - 9, when the product is run on a computer.
